# EUROPEAN PATENT SPECIFICATION

(11) **EP 2 785 221 B1**
(45) Date of publication and mention of the grant of the patent: **02.11.2016**
(21) Application number: 12837670.4
(22) Date of filing: 03.12.2012
(51) Int. Cl.: A47J 27/62

(54) **CONTROL DEVICE FOR COOKING WITH A STEAM SENSOR**
STEUERUNGSVORRICHTUNG ZUM KOCHEN MIT EINEM DAMPFSENSOR
DISPOSITIF DE COMMANDE DE LA CUISSON POURVU D'UN CAPTEUR DE VAPEUR

(30) Priority: 02.12.2011 SI 201100452 P
(43) Date of publication of application: 08.10.2014
(73) Proprietor: Smrke, Albin, 1230 Domzale (SI)
(72) Inventor: Smrke, Albin, 1230 Domzale (SI)
(74) Representative: Pipan, Marjan
(86) International application number: PCT/SI2012/000063
(87) International publication number: WO 2013/081558

(56) References cited:
- EP-A1- 1 525 831
- DE-A1- 10 022 731
- DE-U1- 29 809 392
- GB-A- 2 041 583

## Description

The invention relates to the control device for cooking food in the cooking container, where temperature and especially boiling point in the cooking container are directly determined with the help of at least one smart sensor.

The invention relates to the control device for cooking food in the cooking container, where temperature and especially boiling point in the cooking container are directly determined with the help of at least one smart sensor.

The invention also relates to the system assembled from a cooking container, sensor and control device.

Procedures for automatic control of cooking process and cooking system, which includes e.g. the stove and the container, are known from the state of the art.

Beside this, different methods for energy control in the cooking process on the stove for food preparation that control and automate process are also known from the state of the art.

For example, from DE 38 11 925 C1 we know the device for power control, where the sensor is integrated in the hotplate. The heater is turned on and off with the help of the temperature sensor. The problem is that the boiling point depends on the content of the container, salinity and altitude. Those changes in the boiling point disable automation process, also known from DE 38 11 925 C1, with the help of temperature sensor.

Alternative boiling point control is known from DE 31 46 638 A1, where sound sensor, which is in principle installed under the container, is used for determining the boiling point.

Determining boiling point in the container with food that is based on the sound sensor for cooking is excluded from the patent DE 196 38 355 C2. Acoustic sensor records the sound, and then signal is analyzed with complicated procedure, so that determining boiling point is guaranteed, regardless of the type and size of the container and influence of other diverse conditions. It is expected that the cooking process is divided into two parts. Low frequencies and high frequencies for complete cooking area. Amplitude values are calculated for every area and based on this the type of boiling is concluded. Such frequency analysis of acoustic noise, which is received by the sensor, demands relatively high computer performance and also excessive costs for integration into e.g. water heater.

From the document DE 298 09 392 U1 the temperature determining system includes at least two sensors (23, 24), the output signals of which are supplied to an electronic evaluation unit, for regulating the heating unit of the cooking container (11). One sensor at least is a temperature, sensor. The container (11) has a recess (20) with a short cylindrical attachment piece projecting outwards, at which an outer sensor (23) is arranged. One inner sensor (24) at least is arranged adjoining the inner region of the cooking container (11). At least one external (23) and one internal sensor (24) are connected together, and are connected to transmit signals to a single input of the electronic evaluation unit (27).

It is also known from document DE 100 22 731 the device which has a mechanical energy storage device for supplying a load and a generator for converting the stored energy into electrical energy, which is temporarily stored in a capacitor. The load is an electrical load and contains at least one sensor for detecting a physical parameter, preferably one describing the cooking process.

Based on this state of the art, the invention is based on simplified method for controlling process of cooking food in the cooking container and at the same time offers methods of use with suggesting appropriate system - device.

The solution is given with the control device in accordance with the claim 1.

The invention is based on the idea that it is possible to determine the boiling state in the container with simple temperature measuring. With feeding energy into the container the water - food temperature rises to the boiling point. With the formation of steam bubbles, partial pressure over the container increases and when it exceeds specific threshold, it starts to leak from the container. Most often this is manifested as effervescence and unwanted leaking of steam during cooking. The device controllably uses this principle according to the invention and uses steam energy for measuring temperature and then for regulating energy on the stove.

"Method for controlling the cooking process" represents the simplest implementation, at least one identification, mainly temperature, or at least the boiling point. In more complicated implementations this procedure can include additional functions, such as automatic energy control in the cooking process.

Under the term "steam sensor" communicate sensors, which can generate sensor signal from the data on the steam flow on the opening of the lid. In the invention we preferentially use a thermoelement.

Under the term "food" communicate things that are heated to the boiling point during the cooking process. This includes mostly liquids, mainly valid for water, but also valid for other solid items that cook. According to the invention, cooking includes food preparation, explicitly solid food, such as vegetable, which does not have to cook in the liquid (mainly water).

According to the invention, the device includes at least one cooking container, where the food is cooking, at least one steam sensor for detection of food cooking process, at least one control device for determining temperature and mostly the boiling point of the food that is decided directly.

Of course there is a possibility to place the temperature sensor into the wall of the cooking container or attach it into the container with the help of the support.

It is especially interesting to use data from the sensor for automatic energy control. This device for automatic energy control depends on at least one sensorPreferentially the sensor signal - signals are used as input into the Fuzzy logical control that has a control signal for power supply as a output valueThe method according to the invention and the device according to the invention are especially appropriate for the use with the cooking process for food preparation. But we have to stress that the system is useful everywhere, where we use water for reaching boiling point and energy is controlled automatically. For example, possible is the use on the field of caldrons or other devices for heating liquid (also for transmission from solid to liquid phase).

The invention is additionally explained with drawings with examples of use of the invention.

The drawings show:
Fig. 1: Implementation of the device in the form of a container for cooking food;
Fig. 2: Diagram of the time course of the temperature on the steam sensor;
Fig. 3: Implementation of the device in the form of a handle on the lid with possible directions of steam;
Fig. 4: Handle section;
Fig. 5: Schematically presented function of steam transition;
Fig. 6: Possibility of using the opening on the lid as a steam sensor;
Fig. 7: Device section in the image 6;
Fig. 8: Method of fixing with closed lifting mechanism;
Fig. 9: Method of fixing with opened lifting mechanism;

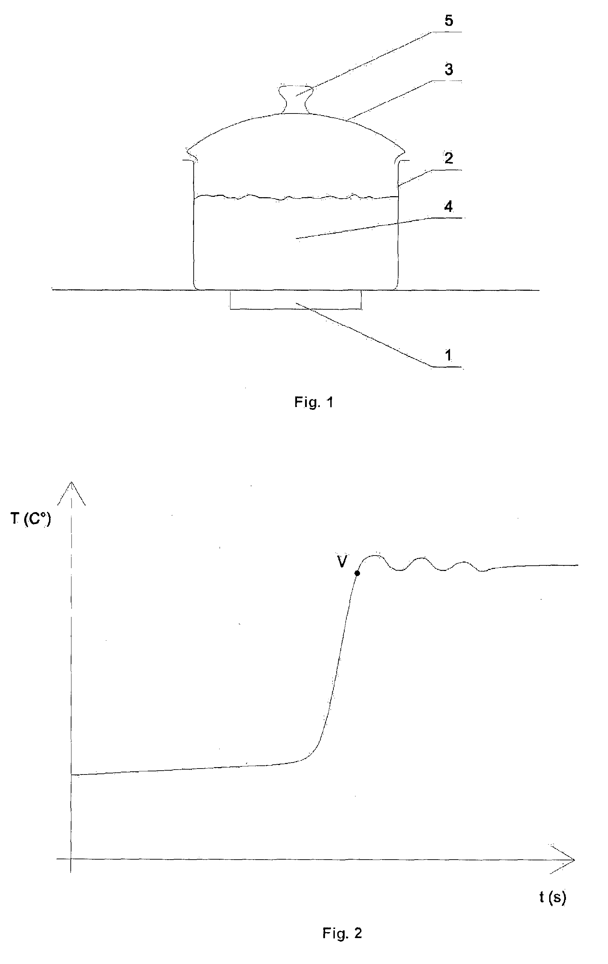

Fig. 1: Implementation of the device in the form of a container for cooking food;
Typical cooking device consists of:
- Stove 1 that has an energy source - that can be electrical high - lite heater, induction heater, gas heater or other. In the device is also energy regulator that is wired or wirelessly connected with the container.
- Containers 2 with the lid 3
- Food 4
- Lid handle 5

Fig. 2: Diagram of the time course of the temperature on the steam sensor;
Because we can control energy continuously between 0 and maximal power, the temperature can be controlled linearly. When we turn on the energy on the heater, the water temperature starts rising linearly depending on the time. In the beginning we do not sense the temperature change on the "steam sensor" on the opened lid, because we do not have larger heat transmission from the food to the lid. When the temperature approaches the boiling point, the signal on the sensor rises and reaches maximum in the point V, which can be used for regulation signal. It is not necessary to turn off the energy, after the point V is reached, we can control it in an optional manner for maintaining boiling with the help of regulation electronics and similar, which can be a consequence of the user settings. One possibility is to periodically turning the heater off and on.

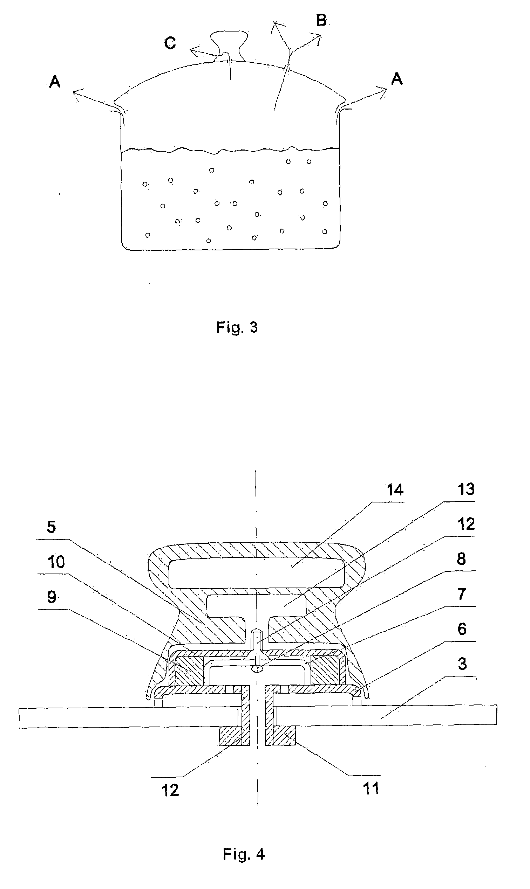

Fig. 3: Implementation of the device in the form of a handle on the lid with possible directions of steam;
In the Fig. 3 we see possible exhausts of the steam:
- Most times in practical cooking steam escapes at the joint between the lid and the pot A
- Modern lids have special opening B, because of the noise caused by the steam, if it escapes at the rim between the container and the lid. Here exists a big risk for the user to burn himself/herself on the exhaust.
- According to the invention, one of the possibilities is the use of a special steam channel C, which is in the handle and directs the steam back onto the lid and does not heat the handle

Fig. 4: Handle section;
Fig. : shows one of the possible device solutions according to the invention. The handle 5 is fixed to the lid 3 with the help of a special mechanism that enables universal use on multiple lids. There is a metal support 6 attached to the lid with the screw 11 that has an opening in the middle. Fixing is done with the help of the nut 11. The metal part 6 is made of iron, so that it creates enough attraction on the magnet 9 that is mounted on the casing 10, which is a component of the handle. On the middle of the magnetic support is built-in heat-resistant plastic 7 that has built-in sensor 8 in the middle. The sensor is connected with the electronic module 14, which wirelessly sends data into the stove for control. There is also mechanism for separating handle 12 in the handle, which is connected with the part 10 with magnets by the screw.
   It is know that magnet force drops with distance from the metal support. The handle is released with lifting the part 10 just for a few millimeters.

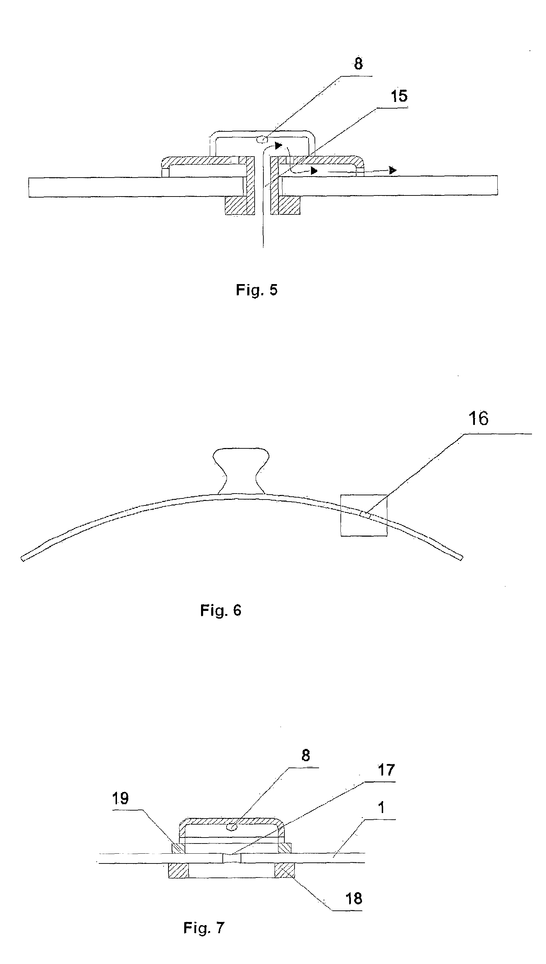

Fig. 5: Schematically presented function of the steam transition;

Fig. 5 shows only the detail of the steam transmission 15 from the section in the image 4. We can see steam transmission trough the opening in the screw. Steam energy is partly transmitted to the temperature sensor 8 and then leaves the area of the handle trough the opening in the metal support. It leaves the support horizontally beside the lid through the opening on the rim and does not heat the handle.

Fig. 6: Possibility of using the opening on the lid for steam sensor;
Fig 6 shows schematic possibility of sensor layout in the device 16, over the opening of the lid.

Fig. 7: Device section in the Fig 6;
Fig. 7 shows one of the solution for fixing the device according to the image 6, with the help of magnet 18 over the lid and laying two-pieced part 19, which has iron ring on the bottom part for fixing with magnet and fixed sensor 8 on the upper insulated part. Steam transmits trough the opening 17 and escapes horizontally at the opening of the casing 19.

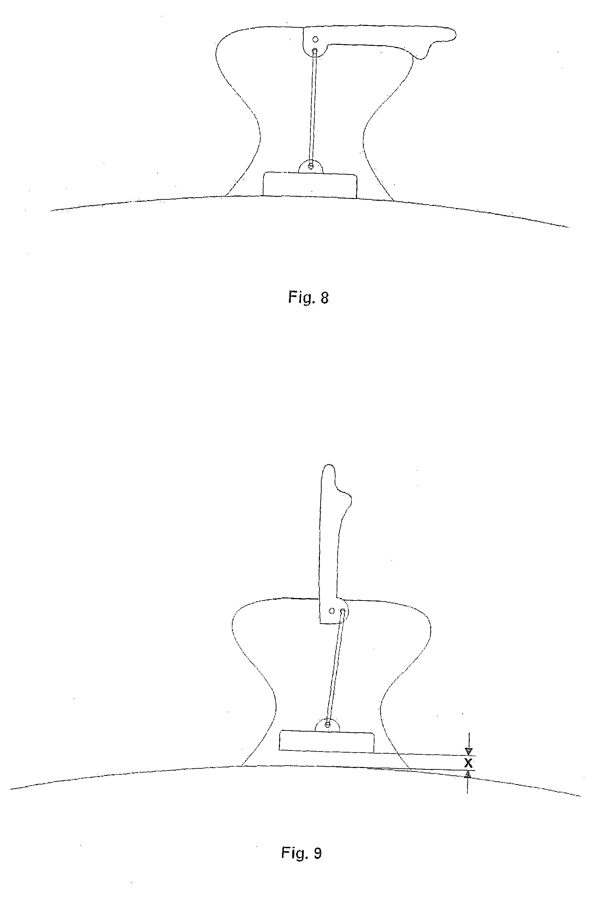

Fig. 8: Method of fixing with closed lifting mechanism;
Fig 8 shows one of the possible mechanisms for lifting the handle in the closed position.

Fig. 9: Method of fixing with opened lifting mechanism;
Fig 9 shows one of the possible mechanisms for lifting the handle in the opened position.

Data are sent wirelessly to the control unit integrated in the stove. This transmission is done by the principles of classical market solution, possible with 2.4 GHz transmission. The values are accepted by the receiving unit, which analyses them with the help of microprocessor and determines output signal, which controls the heater with the help of soft logic based on the input signals. Because the processes are very different and include also roasting, melting of frozen items, cooking with minimal water and similar, we can turn on additional control logic. In this way energy can be controlled very accurately and automatically, regardless of the type of the cooking process. We can also turn on the temperature sensor on the heater.

Data from both sensors enable determining approximate image of the temperature field in the container. Analysis of temperature field gives even better possibility of control. Output power is determined in the soft logic based on all input signals with definition of the rules of the soft logic.

Method according to the invention for automatization of cooking process can goes in two parts, (preferably automatically) heating phase and the second phase of continuing cooking or reheating.

Because there are many different cooking processes in practice, it is very difficult to control the process only with the sensor readings. Because of this, user has a possibility to determine basic process, which he/she wants: 1 Cooking with water, 2 Cooking with little water, 3 Roasting or specific program, such as melting chocolate or cooking spaghetti. Specially enabled is recognition of different containers with the special sensor, such is pressure cooker, or similarly with the help of identification code. Steam sensor can be used as a safety element, if the water completely evaporates from the container.

Selection of cooking method can also be reached automatically, for example kitchen utensils - containers have a signal for identification.

## Claims

1. Control device for cooking food in a cooking container (2) with a lid (3), wherein temperature and especially boiling point in the cooking container are directly determined with the help of at least one temperature sensor, comprising an handle (5) adapted to be installed over an opening (17) on the lid (3) and having a buil-in temperature sensor (8),
**characterized In that**
the handle (5) has a special steam channel (C), which is in the handle and directs steam (15) from the container (2) to the temperature sensor (8) and back onto the lid (3), such that the steam does not heat the handle (5).

## Patentansprüche

1. Steuerungsvorrichtung zum Kochen in einem Kochbehälter (2) mit einem Deckel (3), wobei die Temperatur und vor allem der Kochpunkt im Kochbehälter unmittelbar mit mindestens einem Temperatursensor erfasst werden, umfassend einen Handgriff (5), der zum Auflegen über eine Öffnung (17) auf dem Deckel (3) angepasst ist und einen eingebauten Temperatursensor (8) aufweist,
**dadurch gekennzeichnet, dass**
der Handgriff (5) einen, sich im Handgriff befindlichen gesonderten Dampfkanal (C) aufweist, der den Dampf (15) aus dem Behälter (2) zum Temperatursensor und zurück auf den Deckel (3) führt, sodass der Dampf den Handgriff nicht erwärmt.

## Revendications

1. Dispositif de commande de la cuisson dans un récipient de cuisson (2) avec un couvercle (3), dans lequel la température et notamment le point d'ébullition dans le récipient de cuisson sont directement déterminés à l'aide d'au moins un capteur de température, comprenant un manche (5) adapté pour être installé au-dessus d'une ouverture (17) sur le couvercle (3) et ayant un capteur de température intégré (8),
**caractérisé en ce que**
le manche (5) possède un canal à vapeur spécial (C) qui se trouve dans le manche et dirige la vapeur (15) du récipient (2) vers le capteur de température et la renvoie vers le couvercle (3), de sorte que la vapeur ne chauffe pas le manche.
